# DEMANDE DE BREVET EUROPEEN

(11) **EP 2 273 213 A2**
(43) Date de publication de la demande: **12.01.2011**
(21) Numéro de dépôt: 10168102.1
(22) Date de dépôt: 01.07.2010
(51) Int. Cl.: F24J 3/08, F28F 19/00

(54) **Dispositif de raccordement de conduites d'amenée et de retour de fluide caloporteur d'une sonde de géothermie**

(30) Priorité: 02.07.2009 FR 0954530
(71) Demandeur: Sotra-Seperef, 69650 Quincieux (FR)
(72) Inventeur: Vives, Philippe, 69380, Chazay d'Azergues (FR)
(74) Mandataire: Maureau, Philippe

(57) **Abrégé**

Ce dispositif de raccordement (2) de conduites d'amenée et de retour de fluide caloporteur d'une sonde de géothermie, comprend une première portion tubulaire (3) sensiblement rectiligne comportant une première extrémité (5) destinée à être reliée à une conduite de retour de fluide caloporteur et une seconde extrémité fermée (6), et une deuxième portion tubulaire (4) sensiblement rectiligne comportant une première extrémité (7) destinée à être reliée à une conduite d'amenée de fluide caloporteur et une seconde extrémité (8), la deuxième portion tubulaire (4) débouchant dans la première portion tubulaire (3) en amont de la seconde extrémité fermée (6) de cette dernière.

## Description

La présente invention concerne un dispositif de raccordement de conduites d'amenée et de retour de fluide caloporteur d'une sonde de géothermie, et une sonde de géothermie comportant un tel dispositif de raccordement.

Une sonde de géothermie comporte, de façon connue, une conduite d'amenée de fluide caloporteur et une conduite de retour de fluide caloporteur disposées verticalement dans un forage de plusieurs dizaines de mètres de profondeur. Les conduites d'amenée et de retour de fluide caloporteur sont reliées en partie basse par un dispositif de raccordement, généralement en U, permettant un écoulement de fluide caloporteur de la conduite d'amenée vers la conduite de retour. En partie haute, les conduites sont raccordées à des canalisations agencées pour relier les conduites à une pompe à chaleur installée dans un local technique d'un bâtiment.

Le principe de fonctionnement d'une telle sonde de géothermie consiste à capter des calories stockées dans le sol par l'intermédiaire des conduites d'amenée et de retour de fluide caloporteur qui constituent des échangeurs thermiques verticaux, et à les transférer à la pompe à chaleur qui extrait ces calories du fluide caloporteur et les restitue à un circuit de chauffage du bâtiment.

Les conduites d'amenée et de retour de fluide caloporteur, la pompe à chaleur et les canalisations reliant ces dernières forment un circuit fermé dans lequel circule le fluide caloporteur.

Un inconvénient d'un tel circuit fermé réside dans le fait que d'éventuelles particules et impuretés en suspension dans le fluide caloporteur sont susceptibles de se déposer sur des éléments constitutifs de la pompe à chaleur, ce qui peut nuire au rendement, voire au fonctionnement de la pompe à chaleur.

Le document WO 94/18510 décrit un dispositif de raccordement de conduites d'amenée et de retour de fluide caloporteur d'une sonde de géothermie, comprenant une première portion tubulaire sensiblement rectiligne comportant une première extrémité destinée à être reliée à une conduite d'amenée de fluide caloporteur et une seconde extrémité fermée, et une deuxième portion tubulaire sensiblement rectiligne comportant une première extrémité destinée à être reliée à une conduite de retour de fluide caloporteur et une seconde extrémité ouverte débouchant dans la première portion tubulaire en amont de la seconde extrémité fermée de cette dernière. Un tel dispositif de raccordement ne permet pas de protéger la pompe à chaleur contre des risques de dysfonctionnement dus à la circulation de particules et impuretés en suspension dans le fluide caloporteur.

En effet, lorsque la première portion tubulaire est reliée à une conduite d'amenée de fluide caloporteur, le fluide caloporteur provenant de cette dernière provoque la recirculation des particules et impuretés éventuellement déposées au fond de la première portion tubulaire.

De même, si le branchement du dispositif décrit dans le document WO 94/18510 est inversé, c'est-à-dire en reliant la seconde portion tubulaire à une conduite d'amenée de fluide caloporteur, le fluide caloporteur provenant de cette dernière provoque également la recirculation des particules et impuretés éventuellement déposées au fond de la première portion tubulaire.

La présente invention vise à remédier à cet inconvénient.

Le problème technique à la base de l'invention consiste donc à fournir un dispositif de raccordement de conduites d'amenée et de retour de fluide caloporteur d'une sonde de géothermie qui soit de structure simple et compacte, tout en protégeant la pompe à chaleur contre des risques de dysfonctionnement dus à la circulation de particules et impuretés en suspension dans le fluide caloporteur.

A cet effet, l'invention concerne un dispositif de raccordement de conduites d'amenée et de retour de fluide caloporteur d'une sonde de géothermie, le dispositif comprenant une première portion tubulaire sensiblement rectiligne comportant une première extrémité destinée à être reliée à une conduite de retour de fluide caloporteur et une seconde extrémité fermée, et une deuxième portion tubulaire sensiblement rectiligne comportant une première extrémité destinée à être reliée à une conduite d'amenée de fluide caloporteur et une seconde extrémité, la deuxième portion tubulaire comprenant, au niveau de sa seconde extrémité, une ouverture débouchant dans la première portion tubulaire en amont de la seconde extrémité fermée de cette dernière, **caractérisé en ce que** la seconde extrémité de la deuxième portion tubulaire est fermée, et en ce que l'ouverture est ménagée dans la paroi latérale de la deuxième portion tubulaire.

Ainsi, la partie de la première portion tubulaire qui s'étend au-delà de la seconde extrémité de la deuxième portion tubulaire forme un réservoir favorisant la décantation et la stagnation des particules et impuretés en suspension dans le fluide caloporteur.

De ce fait, les particules et les impuretés décantées dans le réservoir formé par le dispositif de raccordement ne sont plus susceptibles de remonter jusqu'à la pompe à chaleur, et donc de nuire au rendement, voire au fonctionnement de cette dernière.

En outre, le fait que la seconde extrémité de la deuxième portion tubulaire soit fermée permet de générer une perte de charge importante ayant pour conséquence de diminuer la vitesse du fluide caloporteur provenant de la conduite d'amenée de fluide caloporteur et traversant l'ouverture ménagée dans la paroi latérale de la deuxième portion tubulaire. Ces dispositions permettent de diminuer la vitesse du fluide caloporteur en partie haute du réservoir délimité par le dispositif de raccordement, ce qui empêche une recirculation des particules et impuretés déposées au fond du réservoir.

De préférence, les première et deuxième portions tubulaires sont inclinées l'une par rapport à l'autre. Ces dispositions permettent d'obtenir un dispositif de raccordement compact, ce qui permet de diminuer le diamètre du forage destiné à recevoir la sonde de géothermie.

De façon avantageuse, le dispositif de raccordement est monobloc. Ces dispositions permettent de limiter les risques de fuite au niveau du dispositif de raccordement.

Préférentiellement, le dispositif de raccordement est réalisé en matière thermoplastique.

De préférence, le dispositif de raccordement comprend une patte ménagée au niveau de l'extrémité fermée de la première portion tubulaire, la patte comportant de préférence au moins une ouverture traversante.

La présente invention concerne également une sonde de géothermie comportant une conduite d'amenée de fluide caloporteur et une conduite de retour de fluide caloporteur, **caractérisée en ce qu**'elle comprend en outre un dispositif de raccordement selon l'invention, la première extrémité de la première portion tubulaire étant reliée à la conduite de retour de fluide caloporteur et la première extrémité de la deuxième portion tubulaire étant reliée à la conduite d'amenée de fluide caloporteur.

De toute façon l'invention sera bien comprise à l'aide de la description qui suit en référence au dessin schématique annexé représentant, à titre d'exemple non limitatif, une forme d'exécution de ce dispositif de raccordement.
Figure 1 est une vue en perspective d'un dispositif de raccordement selon l'invention.
Figure 2 est une vue en perspective en coupe longitudinale du dispositif de raccordement de figure 1.

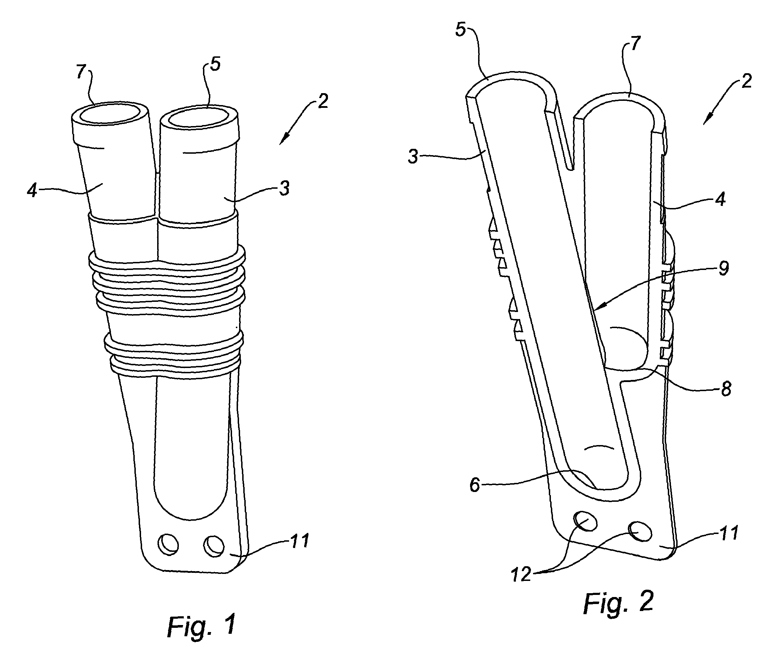

Les figures 1 et 2 représentent un dispositif de raccordement 2 de conduites d'amenée et de retour de fluide caloporteur d'une sonde de géothermie. Un tel dispositif de raccordement 2 est couramment appelé « pied de sonde ».

Le dispositif de raccordement 2 est avantageusement monobloc, et est de préférence réalisé en matière thermoplastique, par exemple en polyéthylène.

Le dispositif de raccordement 2 comprend une première portion tubulaire 3 sensiblement rectiligne et une deuxième portion tubulaire 4 sensiblement rectiligne, les première et deuxième portions tubulaires étant inclinées l'une par rapport à l'autre et s'étendant dans un même plan. Le dispositif de raccordement 2 présente ainsi sensiblement la forme d'un V.

La première portion tubulaire 3 comporte une première extrémité 5 destinée à être reliée à une conduite de retour de fluide caloporteur et une seconde extrémité fermée 6.

La deuxième portion tubulaire 4 comporte une première extrémité 7 destinée à être reliée à une conduite d'amenée de fluide caloporteur et une seconde extrémité fermée 8.

La deuxième portion tubulaire 4 comprend une ouverture 9 ménagée dans sa paroi latérale au niveau de sa seconde extrémité 8, ladite ouverture 9 débouchant dans la première portion tubulaire 3 en amont de la seconde extrémité fermée 6 de cette dernière.

Le dispositif de raccordement 2 comprend en outre une patte 11 ménagée au niveau de l'extrémité fermée 6 de la première portion tubulaire 3, la patte 11 s'étendant dans le prolongement des première et deuxième conduites 3, 4. La patte 11 comporte deux ouvertures traversantes 12 agencées pour permettre la fixation d'un dispositif de protection conçu pour protéger le dispositif de raccordement durant l'installation de la sonde de géothermie dans le forage en évitant un contact entre le dispositif de raccordement et les paroi délimitant le forage.

Comme il va de soi, l'invention ne se limite pas à la seule forme d'exécution de ce dispositif de raccordement, décrite ci-dessus à titre d'exemple, elle en embrasse au contraire toutes les variantes de réalisation. C'est ainsi notamment que les portions tubulaires 3 et 4 pourraient être reliées respectivement à une conduite d'amenée et à une conduite de retour de fluide, sans que l'on sorte du champ de l'invention.

## Revendications

1. Dispositif de raccordement (2) de conduites d'amenée et de retour de fluide caloporteur d'une sonde de géothermie, le dispositif comprenant une première portion tubulaire (3) sensiblement rectiligne comportant une première extrémité (5) destinée à être reliée à une conduite de retour de fluide caloporteur et une seconde extrémité fermée (6), et une deuxième portion tubulaire (4) sensiblement rectiligne comportant une première extrémité (7) destinée à être reliée à une conduite d'amenée de fluide caloporteur et une seconde extrémité (8), la deuxième portion tubulaire (4) comprenant, au niveau de sa seconde extrémité (8), une ouverture (9) débouchant dans la première portion tubulaire (3) en amont de la seconde extrémité fermée (6) de cette dernière, **caractérisé en ce que** la seconde extrémité (8) de la deuxième portion tubulaire (4) est fermée, et **en ce que** l'ouverture (9) est ménagée dans la paroi latérale de la deuxième portion tubulaire (4).

2. Dispositif de raccordement selon la revendication 1, **caractérisé en ce que** les première et deuxième portions tubulaires (3, 4) sont inclinées l'une par rapport à l'autre.

3. Dispositif de raccordement selon la revendication 1 ou 2, **caractérisé en ce qu'**il est monobloc.

4. Dispositif de raccordement selon l'une des revendications 1 à 3, **caractérisé en ce qu'**il est réalisé en matière thermoplastique.

5. Dispositif de raccordement selon l'une des revendications 1 à 4, **caractérisé en ce qu'**il comprend une patte (11) ménagée au niveau de l'extrémité fermée (6) de la première portion tubulaire (3), la patte comportant de préférence au moins une ouverture traversante (12).

6. Sonde de géothermie comportant une conduite d'amenée de fluide caloporteur et une conduite de retour de fluide caloporteur, **caractérisée en ce qu'**elle comprend en outre un dispositif de raccordement (2) selon l'une des revendications 1 à 5, la première extrémité (5) de la première portion tubulaire (3) étant reliée à la conduite de retour de fluide caloporteur et la première extrémité (7) de la deuxième portion tubulaire (4) étant reliée à la conduite d'amenée de fluide caloporteur.
